# EUROPÄISCHE PATENTSCHRIFT

(11) **EP 4 223 132 B1**
(45) Veröffentlichungstag und Bekanntmachung des Hinweises auf die Patenterteilung: **04.12.2024**
(21) Anmeldenummer: 23151548.7
(22) Anmeldetag: 13.01.2023
(51) Int. Cl.: A23G 9/12, A23G 9/22, A23G 9/28

(54) **VORRICHTUNG ZUR HERSTELLUNG EINES FLIESSFÄHIGEN PRODUKTES**
DEVICE FOR PRODUCING A FLUID PRODUCT
DISPOSITIF POUR LA FABRICATION D'UN PRODUIT FLUIDE

(30) Priorität: 01.02.2022 DE 102022102255
(43) Veröffentlichungstag der Anmeldung: 09.08.2023
(73) Patentinhaber: RISCHEWSKI, Marc, 75210 Keltern (DE)
(72) Erfinder: RISCHEWSKI, Marc, 75210 Keltern (DE)
(74) Vertreter: Wacker, Jost Oliver

(56) Entgegenhaltungen:
- EP-B1- 2 279 669
- DE-T2- 69 202 987
- US-A1- 2012 312 049

## Beschreibung

Die Erfindung betrifft eine Vorrichtung zur Herstellung eines fließfähigen Produktes, wie insbesondere Speiseeis, Eiscreme oder eines sonstigen cremigen Produktes aus einem Flüssigkeitsgemisch nach dem Oberbegriff des Anspruchs 1. Diese Vorrichtung umfasst einen in einem Vorrichtungsgehäuse vorgesehenen Verarbeitungsbehälter mit einer temperierbaren Innenwandung, die einen zur Aufnahme des Flüssigkeitsgemisches geeigneten Innenraum umschließt. Die Innenwandung ist dabei zum Erwärmen oder Kühlen des Flüssigkeitsgemisches geeignet. Zudem ist in dem Innenraum eine Rühreinrichtung zum Verrühren und Durchmischen des Flüssigkeitsgemisches beziehungsweise des Produktes vorgesehen. Darüber hinaus weist der Verarbeitungsbehälter eine Einfüllöffnung für die Eingabe des Flüssigkeitsgemisches und eine Auslassöffnung für die Abgabe des Produktes auf. Um die Entnahme beziehungsweise das Austreten des Produktes aus dem Verarbeitungsbehälter in einem gewünschten Maße ermöglichen oder aber den Innenraum abdichtend verschließen zu können, umfasst die Vorrichtung ein an der Auslassöffnung verlagerbar gehaltenes Verschlusselement. Dieses ist beispielsweise als Verschlussplatte ausgebildet und zwischen einer Schließstellung, in welcher die Auslassöffnung durch das Verschlusselement flüssigkeitsdicht verschlossen ist, und einer Offenstellung verstellbar, in welcher die Auslassöffnung wenigstens teilweise geöffnet ist. Die Vorrichtung umfasst zudem eine Bedieneinrichtung die ein mit dem Verschlusselement wirkverbundenes Stellglied aufweist, das zwischen einer Fixierstellung, in welcher das Verschlusselement gegenüber der Auslassöffnung positionsstabil fixiert ist, und einer Freigabestellung verschwenkbar ist, in welcher das Verschlusselement zwischen der Schließstellung und der Offenstellung verlagert werden kann.

Derartige Vorrichtungen dienen in erster Linie dazu, dass ein Flüssigkeitsgemisch, insbesondere mit Bestandteilen von Wasser, Milch, Sahne, Joghurt, Verdickungsmittel, Fruchtstücken, Fruchtkonzentrat, Gewürzen und sonstigen geschmackgebenden Bestandteilen, wie Zucker, Vanille, Schokolade und sonstige bekannte und geeignete Bestandteile von Nahrungsmitteln, wie insbesondere Speiseeis, solange mittels der Rühreinrichtung umgerührt wird, bis bei gleichzeitiger Temperierung ein fließfähiges, viskoses Produkt, wie insbesondere Speiseeis, Eiscreme oder eine sonstige Creme entsteht. Ein wesentlicher Bestandteil gattungsgemäßer Vorrichtungen ist die während eines jeweiligen Herstellungsprozesses geschlossene Auslassöffnung, die zur Entnahme des Produktes aus dem Verarbeitungsbehälter geöffnet werden kann.

Aus der DE 692 02 987 T2 ist beispielsweise eine Vorrichtung zur Herstellung eines fließfähigen Produktes bekannt, die eine an der Frontseite eines Verarbeitungsbehälters ausgebildete Auslassöffnung aufweist. Damit das Flüssigkeitsgemisch während der Verarbeitung im Verarbeitungsbehälter gehalten beziehungsweise das Produkt nach dessen Fertigstellung ausgegeben werden kann, ist an der Auslassöffnung eine verlagerbar gehaltene Verschlussplatte vorgesehen. Die Verschlussplatte ist im Sinne eines horizontal verschwenkbaren Türblattes an einem Scharnier an der linken Seite der Auslassöffnung auf der Außenseite des Verarbeitungsbehälters angeordnet. Um die Verschlussplatte in einer die Auslassöffnung abdeckenden Stellung fixieren zu können, ist an der dem Scharnier entgegengesetzten rechten Seite der Auslassöffnung ein Gewindeverschluss ausgebildet. Der Gewindeverschluss ist mit einem manuell betätigbaren Hebel verbunden, der zwischen einer Fixierstellung, in welcher die Verschlussplatte relativ zur Auslassöffnung fixiert ist, und einer Freigabestellung vertikal verschwenkbar ist, in welcher die Verschlussplatte horizontal verlagerbar ist.

Ferner sind Vorrichtung zur Herstellung von Speiseeis bekannt, an deren Auslassöffnung eine vertikal verlagerbares Verschlusselement vorgesehen ist. Das Verschlusselement steht dabei in Eingriff mit einem verschwenkbaren Stellglied, das das Verschlusselement in einer ersten Stellung gegenüber der übrigen Vorrichtung fixiert und in einer zweiten Stellung die vertikale Verlagerung freigibt.

Nachteilig an der bekannten Vorrichtung ist, dass die Bedienung des Stellgliedes für den Benutzer, je nach Arbeitssituation und je nachdem, welche Gegenstände dieser in der jeweiligen Arbeitssituation in seinen Händen halten muss, häufig sehr umständlich ist. Diese Problematik zeigt sich insbesondere bei der Entnahme des Produktes aus dem Verarbeitungsbehälter, bei der ein Einsatz beider Hände eines die Vorrichtung bedienenden Benutzers erforderlich ist. Die bekannten Vorrichtungen sind dabei derart ausgestaltet, dass besagter Benutzer das jeweilige Stellglied zur Entnahme des Produktes mit einer Hand ergreifen, das Verschlusselement entriegeln beziehungsweise freigeben und in die Offenstellung verlagern muss. Zudem muss das Verschlusselement häufig vom Benutzer in der Offenstellung während der Entnahme des Produktes gehalten werden, damit ein Zurückschwenken des Verschlusselementes in das austretende Produkt vermieden wird. Insbesondere im Falle von Vorrichtungen, die sowohl von Rechts- als auch von Linkshändern benutzt werden, führt dies häufig zu Behinderungen und einer umständlichen Bedienung.

Die Aufgabe der Erfindung ist es, bei einer gattungsgemäßen Vorrichtung die genannten Nachteile zu vermeiden, eine komfortable Handhabung und infolge einer verbesserten Ergonomie eine schnellere und effektivere Entnahme des Produktes aus dem Verarbeitungsbehälter zu ermöglichen.

Diese Aufgabe wird durch eine Vorrichtung mit den Merkmalen des Anspruchs 1 gelöst. Dabei ist vorgesehen, dass das Stellglied in einer im Wesentlichen horizontalen Schwenkebene zwischen einer linken Fixierstellung und einer rechten Fixierstellung verschwenkbar ist. Durch die erfindungsgemäße Lösung kann das Stellglied wahlweise nach links oder nach rechts in die jeweilige Fixierstellung verbracht werden, um das Verschlusselement in der Schließstellung oder in einer gewünschten Freigabestellung gegenüber der Auslassöffnung zu fixieren, beziehungsweise um die Bedienungseinrichtung durch entgegengesetztes Verschwenken des Stellgliedes wieder aus der jeweils zuvor gewählten Fixierstellung zu lösen. Durch die hierbei zur Verfügung stehenden beiden unterschiedlichen Fixierstellungen beziehungsweise Schwenkrichtungen kann der Benutzer in Abhängigkeit davon, welche Gegenstände er halten muss und/oder ob er Rechts- oder Linkshänder ist, die jeweils günstigere Fixierstellung beziehungsweise Schwenkrichtung auswählen. Hierdurch kann unabhängig von der jeweils auszuführenden Tätigkeit und/oder unabhängig davon, ob der Benutzer ein Rechts- oder Linkshänder ist, eine ungestörte und komfortable Handhabung der Bedieneinrichtung gewährleistet werden.

In einer bevorzugten Ausgestaltung ist die Freigabestellung dabei, insbesondere mittig, zwischen der linken und rechten Fixierstellung vorgesehen. Dadurch kann die Freigabestellung über zwei einander entgegengesetzte Schwenkrichtungen beziehungsweise von beiden Fixierstellungen aus direkt eingestellt werden. Auf diese Weise kann die Bedieneinrichtungen von beiden Fixierstellungen aus über einen gleichgroßen Schwenkwinkel des Stellgliedes hinweg und damit gleichschnell in die Freigabestellung verbracht werden und andersherum. In einer besonders bevorzugten Ausgestaltung kann dabei vorgesehen sein, dass das Stellglied sich in der Freigabestellung senkrecht gegenüber der Außenseite des Vorrichtungsgehäuses erstreckt.

Vorteilhafterweise ist das Verschlusselement über das Stellglied in der Freigabestellung zwischen der Schließstellung und der Offenstellung vertikal verlagerbar. Dabei kann vorgesehen sein, dass das Verschlusselement im Wesentlichen senkrecht zur Schwenkebene des Stellglieds verlagerbar ist. Auf diese Weise kann das Verschlusselement in der Freigabestellung mit einem Handgriff über das Stellglied aus der Schließstellung in eine gewünschte Offenstellung vertikal entlang der Außenseite des Vorrichtungsgehäuses verstellt und durch eine Schwenkbewegung des Stellglieds in einer der beiden Fixierstellungen arretiert werden. Durch die vorgesehene vertikale Verlagerbarkeit kann die Bedienungseinrichtung besonders platzsparend ausgeführt und betätigt werden, so dass die Vorrichtung auch in einem kleinen Arbeitsplatzbereich aufgebaut und betrieben werden kann. Zudem kann mittels der vertikalen Verlagerung der Öffnungsspalt der Auslassöffnung und die damit einhergehende Austrittsmenge des Produktes sehr einfach und genau reguliert werden.

Ferner ist es hierbei günstig, wenn die Bedieneinrichtung wenigstens ein Anpressmittel aufweist, das das Verschlusselement in den beiden Fixierstellungen in Richtung des Verarbeitungsbehälters mit einer Anpresskraft beaufschlagt. Durch die Beaufschlagung mit der Anpresskraft kann das Verschlusselement, insbesondere bei zumindest teilweiser Herstellung aus einem elastischen Material beziehungsweise bei Ausbildung mit elastischen Dichtmitteln, in den Fixierstellungen eine stabile Positionierung gegenüber der Auslassöffnung beziehungsweise eine sichere Abdichtung der Auslassöffnung in der Schließstellung gewährleisten.

Dabei ist es vorteilhaft, wenn das Anpressmittel als Exzenternockenelement ausgebildet ist, das an das Verschlusselement anlegbar und mittels des Stellgliedes zwischen den beiden Fixierstellungen und der Freigabestellung um eine Drehachse verdrehbar ist. Das Exzenternockenelement ist dabei derart mit dem Stellglied verbunden beziehungsweise gekoppelt, dass eine Schwenkbewegung des Stellgliedes zu einer Verlagerung des Exzenternockenelementes führt. Hierdurch kann über das Exzenternockenelement in einfacher Weise eine ausreichend große Anpresskraft erzeugt werden, um in Abhängigkeit der Stellung des Stellgliedes ein dichtes Verschließen der Auslassöffnung beziehungsweise eine stabile Fixierung des Verschlusselementes gegenüber der Auslassöffnung gewährleisten zu können.

Vorteilhafterweise weist das Exzenternockenelement hierbei eine Außenumfangsfläche auf, die in der Freigabestellung mit einem inneren Kontaktabschnitt und in den beiden Fixierstellungen jeweils mit einem äußeren Kontaktabschnitt an das Verschlusselement anliegt, wobei der radiale Abstand zwischen der Außenumfangsfläche und der Drehachse an dem inneren Kontaktabschnitt kleiner ist als an den beiden äußeren Kontaktabschnitten. Über die Größe der radialen Abstände der beiden äußeren Kontaktabschnitte lassen sich hierbei die in den beiden Fixierstellungen erzeugbaren Anpresskräfte besonders einfach einstellen.

Zudem ist dabei vorzugsweise vorgesehen, dass der Abstand zwischen der Außenumfangsfläche und der Drehachse des Exzenternockenelementes vom inneren Kontaktabschnitt hin zu beiden äußeren Kontaktabschnitten stufenlos zunimmt, so dass die Bedieneinrichtung in komfortabler Weise und ohne größeren Kraftaufwand zwischen der Freigabestellung und den beiden Fixierstellungen umschaltbar ist.

In einer weiteren vorteilhaften Ausführungsform ragt das drehbeweglich gelagerte Exzenternockenelement in eine Vertiefung des Verschlusselementes, wobei die Außenumfangsfläche an einen Boden der Vertiefung anlegbar ist. Auf diese Weise kann die Außenumfangsfläche in den Fixierstellungen gegen den Boden der Vertiefung gepresst werden, um die Anpresskraft zu erzeugen. Gleichzeitig ist dabei über den Eingriff des Exzenternockenelementes in der Vertiefung ein Formschluss mit dem Verschlusselement herstellbar, der in vertikaler Richtung wirkt. Auf diese Weise wirkt das Exzenternockenelement als Mitnehmer, mittels dem bei vertikaler Verlagerung des Stellgliedes auch das Verschlusselement in gleicher Weise vertikal verlagert wird.

Vorteilhafterweise ist dabei der Boden der Vertiefung konkav gekrümmt und an eine Krümmung der Außenumfangsfläche angepasst. Auf diese Weise kann das Exzenternockenelement das Verschlusselement in den beiden Fixierstellungen über eine größere Fläche gegen das Vorrichtungsgehäuse pressen, so dass die durch die Anpresskraft erzeugten Haltekräfte gleichmäßig verteilt werden beziehungsweise eine zuverlässige Abdichtung erzeugt wird. Hierzu weist die Vertiefung vorzugsweise ein C-förmiges Längsprofil auf.

Ferner ist es günstig, wenn die Bedieneinrichtung einen an der Außenseite des Vorrichtungsgehäuses angeordneten Führungsstab aufweist, der die Drehachse bildet und an dem das Exzenternockenelement drehbeweglich gelagert ist. Beispielsweise kann der Führungsstab zusammen mit der übrigen Bedieneinrichtung an einer Tür gehalten sein, mittels der der Verarbeitungsbehälter verschließbar ist. Das am Exzenternockenelement angreifende Stellglied bildet dabei einen Hebelarm, über den bereits mit einer geringen Kraftbeaufschlagung ein relativ großes Moment am Exzenternockenelement erzeugt werden kann. Hierdurch ist ein komfortables Verstellen der Bedieneinrichtung und dessen Stellgliedes zwischen der Freigabestellung und den beiden Fixierstellungen ohne großen Kraftaufwand möglich.

Vorteilhafterweise weist das Exzenternockenelement eine Durchgangsbohrung zur vertikal verschiebbaren und verdrehbaren Lagerung am Führungsstab auf. Die Durchgangsbohrung ist dabei derart ausgestaltet, dass das Exzenternockenelement um die durch den Führungsstab gebildete Drehachse verdrehbar und ferner in axialer Richtung entlang der Längsachse des Führungsstabes verschiebbar ist. Auf diese Weise kann das Verschlusselement durch eine vertikale Verlagerung des Stellgliedes entlang des Führungsstabes verlagert werden, um es insbesondere zwischen der Schließstellung und einer Offenstellung gegenüber der Auslassöffnung verstellen zu können.

In einer besonders bevorzugten Ausführungsform der Vorrichtung kann vorgesehen sein, dass in der Auslassöffnung ein Gitter positionsfest angeordnet ist. Mittels des Gitters wird dabei sichergestellt, dass kein versehentlicher Zugriff auf den Innenraum des Verarbeitungsbehälters während des Betriebs der Rühreinrichtung erfolgt.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

Weitere Vorteile und Merkmale der Erfindung ergeben sich aus den Ansprüchen und der nachfolgenden Figurenbeschreibung, in der Ausführungsbeispiele der Erfindung unter Bezugnahme auf die Zeichnungen im Einzelnen erläutert sind. In den Figuren ist eine beispielhafte Ausführungsform der Erfindung dargestellt. Es zeigen:
- Figur 1: eine Frontansicht einer erfindungsgemäßen Vorrichtung,
- Figur 2: eine Seitenansicht der Vorrichtung nach Figur 1,
- Figur 3: eine perspektivische Explosionsansicht einer Tür der Vorrichtung gemäß Fig. 1,
- Figur 4: eine Draufsicht auf ein Stellglied einer Bedieneinrichtung der Tür in Richtung IV gemäß Figur 3,
- Figur 5: eine Frontansicht der Tür gemäß Fig. 4 mit einem Verschlusselement in der Schließstellung und dem Stellglied in der linken Fixierstellung,
- Figur 6: eine Frontansicht der Tür gemäß Fig. 4 mit dem Verschlusselement in der Schließstellung und dem Stellglied in einer Freigabestellung,
- Figur 7: eine Frontansicht der Tür gemäß Fig. 4 mit dem Verschlusselement in einer Offenstellung und dem Stellglied in der Freigabestellung und
- Figur 8: eine Frontansicht der Tür gemäß Fig. 4 mit dem Verschlusselement in der Offenstellung und dem Stellglied in der linken Fixierstellung.

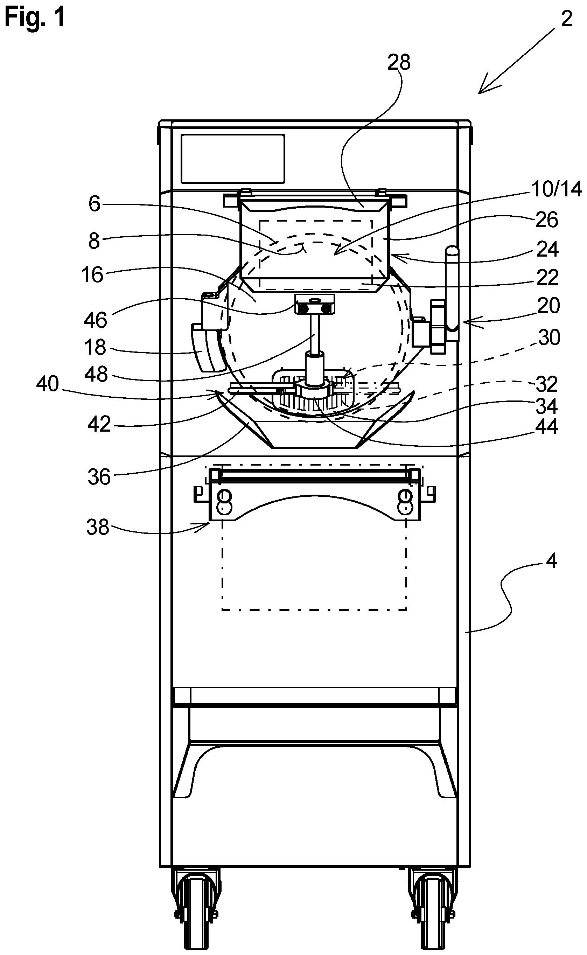

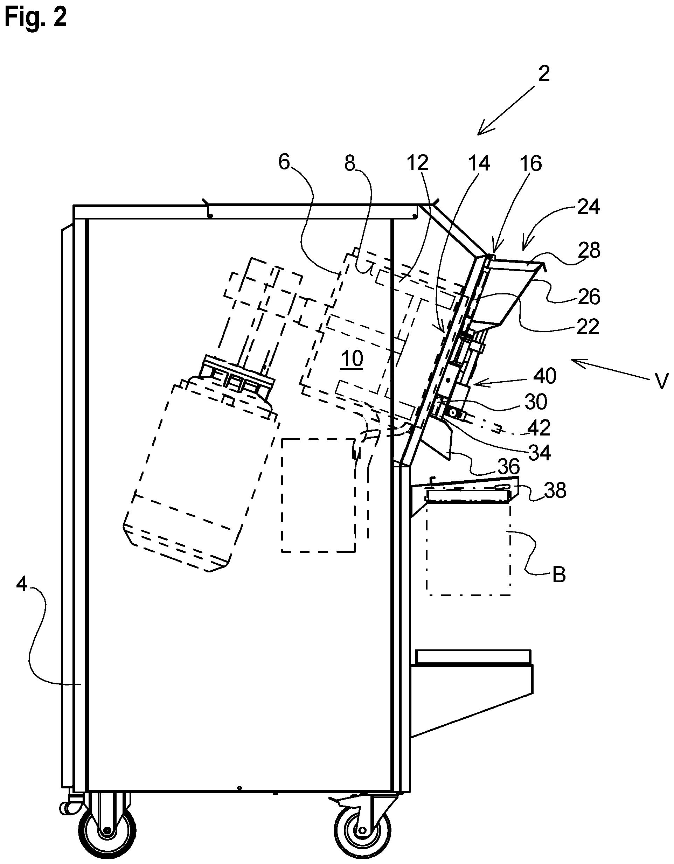

In den Figuren 1 und 2 ist eine beispielhafte Ausführungsform einer Vorrichtung 2 zum Herstellen eines fließfähigen Produktes, insbesondere von Speiseeis, aus einem Flüssigkeitsgemisch gezeigt. Die Vorrichtung 2 umfasst ein Vorrichtungsgehäuse 4, in dem ein zylindrischer Verarbeitungsbehälter 6 untergebracht ist. Wie insbesondere aus Figur 2 zu entnehmen ist, weist der Verarbeitungsbehälter 6 eine temperierbare Innenwandung 8 auf, die einen Innenraum 10 umschließt, in dem das zu bearbeitende Flüssigkeitsgemisch aufgenommen wird. Die temperierbare Innenwandung 8 dient dabei zum Kühlen oder Erwärmen des aufgenommenen Flüssigkeitsgemisches. Zudem ist in dem Innenraum 10 eine Rühreinrichtung 12 aufgenommen, mittels der das Flüssigkeitsgemisch gerührt beziehungsweise durchmischt werden kann.

Der Verarbeitungsbehälter 6 weist zudem eine Behälteröffnung 14 auf, die mit einer verschwenkbaren Tür 16 flüssigkeitsdicht verschlossen werden kann. Die Tür 16 ist hierzu an einer Vorderseite V des Vorrichtungsgehäuses 4 beispielsweise mittels eines Scharniers 18 verschwenkbar gelagert. An einer vom Scharnier 18 abgewandten Seite ist zwischen der Tür 16 und dem Vorrichtungsgehäuse 4 ferner eine Verriegelungseinrichtung 20 vorgesehen, mittels der die Tür 16 im verschlossenen Zustand des Verarbeitungsbehälters 6 verriegelt werden kann.

Um das für die Herstellung des Produktes erforderliche Flüssigkeitsgemisch, das insbesondere Bestandteile von Wasser, Milch, Sahne, Verdickungsmittel, Fruchtstücken, Fruchtkonzentrat, Vanille, Schokolade aufweist, in den Verarbeitungsbehälter 6 eingeben zu können, ist im oberen Bereich der Tür 16 eine Einfüllöffnung 22 eingelassen. An dieser Einfüllöffnung 22 ist eine Einfülleinrichtung 24 angeordnet, die einen Einfülltrichter 26 aufweist, über den die Zutaten von außen in den Innenraum 10 des Verarbeitungsbehälters 6 gefüllt werden können und der über einen verschwenkbaren Deckel 28 geöffnet und verschlossen werden kann.

Unterhalb der Einfülleinrichtung 24 ist an der Tür 16 ferner eine Auslassöffnung 30 für die Abgabe des fertigen Produktes eingelassen, an der ein Gitter 32 vorgesehen ist, das einen Zugriff auf die Rühreinrichtung 12 während des Betriebs der Vorrichtung 2 verhindert. Die Auslassöffnung 30 ist durch ein vertikal zwischen einer Offenstellung und einer dargestellten Schließstellung verlagerbares Verschlusselement 34 flüssigkeitsdicht verschließbar. Unterhalb der Auslassöffnung 30 kann, wie dargestellt, ferner eine rinnenförmige Auslasshilfe 36 vorgesehen sein, über die das aus der Auslassöffnung 30 austretende Produkt nach dessen Fertigstellung in einen darunter angeordneten Auffangbehälter B geleitet werden kann. Zur lösbaren Fixierung eines solchen Auffangbehälters B kann unterhalb der Auslasshilfe 36 ferner, wie dargestellt, eine Befestigungseinrichtung 38 vorgesehen sein.

Zum Verstellen des Verschlusselementes 34 zwischen der gezeigten Schließstellung und einer jeweils gewünschten Offenstellung, in welcher die Auslassöffnung 30 wenigstens teilweise geöffnet ist, weist die Vorrichtung 2 eine Bedieneinrichtung 40 auf.

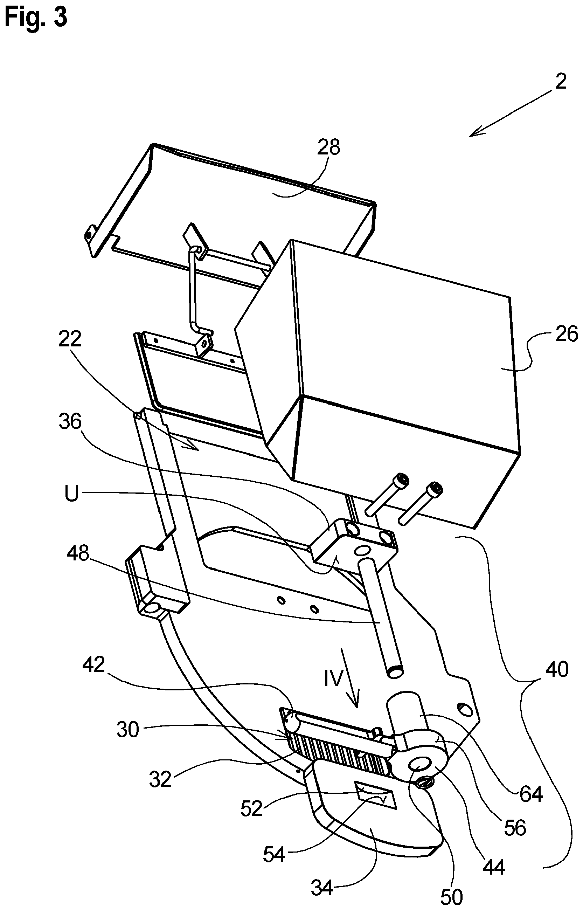

Wie insbesondere aus Figur 3 zu entnehmen ist, weist die Bedieneinrichtung 40 ein Stellglied 42, ein mit dem Stellglied 42 verbundenes und an dem Verschlusselement 34 anlegbares Exzenternockenelement 44 sowie einen mittels eines Lagerelementes 46 an der Tür 16 positionsfest gehaltenen Führungsstab 48 auf. Dieser Führungsstab 48 dient zur verdrehbaren und verschiebbaren Lagerung des Exzenternockenelementes 44 gegenüber der Tür 16. Hierzu ist in das Exzenternockenelement 44 eine Durchgangsbohrung 50 eingelassen, die auf den Führungsstab 48 aufgeschoben ist.

Wie aus Figur 3 ferner zu entnehmen ist, weist das Verschlusselement 34 eine rinnenförmige Vertiefung 52 auf, in die das Exzenternockenelement 44 drehbeweglich eingreifen kann.

Durch diesen Eingriff wird ein Formschluss erzeugt, der parallel zum Führungsstab 48 wirkt und durch den bei Verlagerung des Exzenternockenelementes 44 entlang des Führungsstabes 48 unmittelbar auch das Verschlusselement 34 entsprechend verlagert wird.

Die rinnenförmige Vertiefung 52 weist dabei einen mit dem Exzenternockenelement 44 in Anlage bringbaren, konkav gekrümmten Aufnahmeboden 54 auf, der im Wesentlichen an eine Krümmung einer Außenumfangsfläche 56 des Exzenternockenelementes 44 angepasst ist. Dadurch ist das Exzenternockenelement 44 auch bei Anlage am Aufnahmeboden 54 gegenüber dem Verschlusselement 34 durch eine Schwenkbewegung des Stellgliedes 42 verdrehbar. Die Bedieneinrichtung 40 kann dadurch in eine linke oder eine rechte Fixierstellung verbracht werden, wie sie in Figur 1 dargestellt sind. Dabei ist das Stellglied 42 entweder, gemäß seiner Darstellung mit durchgezogenen Linien, links des Führungsstabes 48 oder, gemäß seiner Darstellung mit strichpunktierten Linien, rechts des Führungsstabes 48 angeordnet. In beiden Fixierstellungen wird dabei über das am Führungsstab 48 gelagerte Exzenternockenelement 44 eine Anpresskraft erzeugt, die das Verschlusselement 34 gegen das Vorrichtungsgehäuse 4 drückt und sie dadurch in ihrer Position fixiert.

Ferner kann die Bedieneinrichtung 40 in eine Freigabestellung verschwenkt werden, bei der das Stellglied 42, gemäß seiner Darstellung mit strichpunktierten Linien in Figur 2, mittig zwischen den beiden Fixierstellungen angeordnet ist. In dieser Freigabestellung ist die durch das Exzenternockenelement 44 erzeugbare Anpresskraft zumindest im Wesentlichen aufgehoben. Dadurch ist das Verschlusselement 34 zusammen mit dem Stellglied 26 entlang des Führungsstabes 48 verlagerbar.

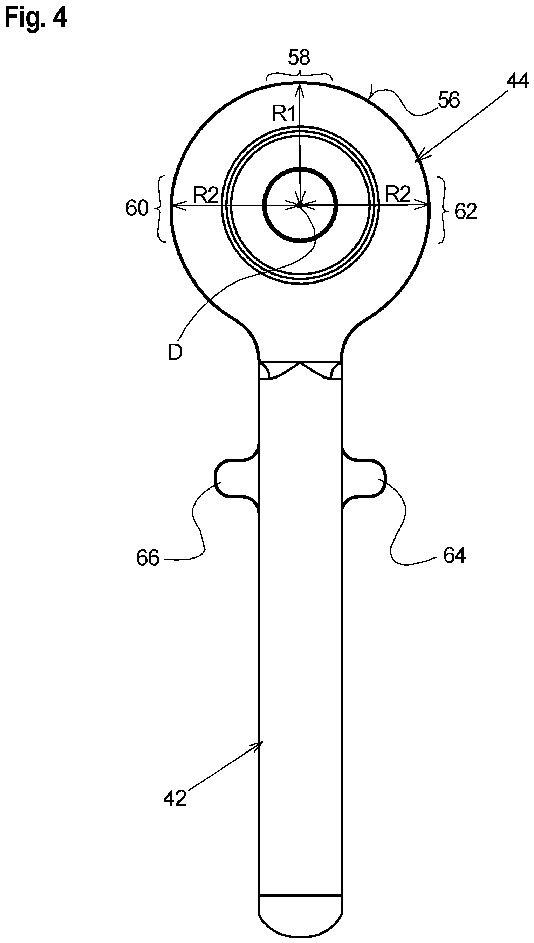

Zur Erzeugung und Aufhebung der Anpresskraft weist die Außenumfangsfläche 56 gemäß Fig. 4 einen inneren Kontaktabschnitt 58 auf, die sich in beide Umfangsrichtungen stufenlos zu jeweils einem äußeren Kontaktabschnitt 60, 62 erstreckt. Der innere Kontaktabschnitt 58 entspricht dabei dem Bereich des Exzenternockenelementes 44, der in der Freigabestellung in der Vertiefung 52 angeordnet ist. Die äußeren Kontaktabschnitte 60, 62 entsprechen dagegen den Bereichen des Exzenternockenelementes 44, die in der linken beziehungsweise in der rechten Fixierstellung am Aufnahmeboden 54 der Vertiefung 52 anliegen.

Wie aus Figur 4 zu entnehmen ist, weist der innere Kontaktabschnitt 58 bezüglich einer Drehachse D des Exzenternockenelementes 44 einen ersten Radius R1 auf, der kleiner ist als ein zweiter Radius R2, der jeweils durch die beiden äußeren Kontaktabschnitte 60, 62 begrenzt wird.

Des Weiteren weist das Exzenternockenelement 44 einen sich von einer Oberseite weg erstreckenden Hohlzylinder 64 auf. Dieser dient als Anschlag zur Anlage an einer Unterseite des Lagerelementes 46, um die Verlagerung des Exzenternockenelementes 44 beziehungsweise der von diesem mitgenommenen Verschlusselement 34 in vertikaler Richtung zu begrenzen.

Am Stellglied 42 sind ferner auf zwei voneinander abgewandten Seiten jeweils ein linker und rechter Abstandshalter 66, 68 ausgebildet, die beide an die Vorderseite des Vorrichtungsgehäuses 4 anlegbar sind, um die seitliche Verschwenkbarkeit des Stellgliedes 42 jeweils nach links und rechts zu begrenzen und dabei in beiden Endpositionen eine gute Greifbarkeit des Stellgliedes 42 zu gewährleisten.

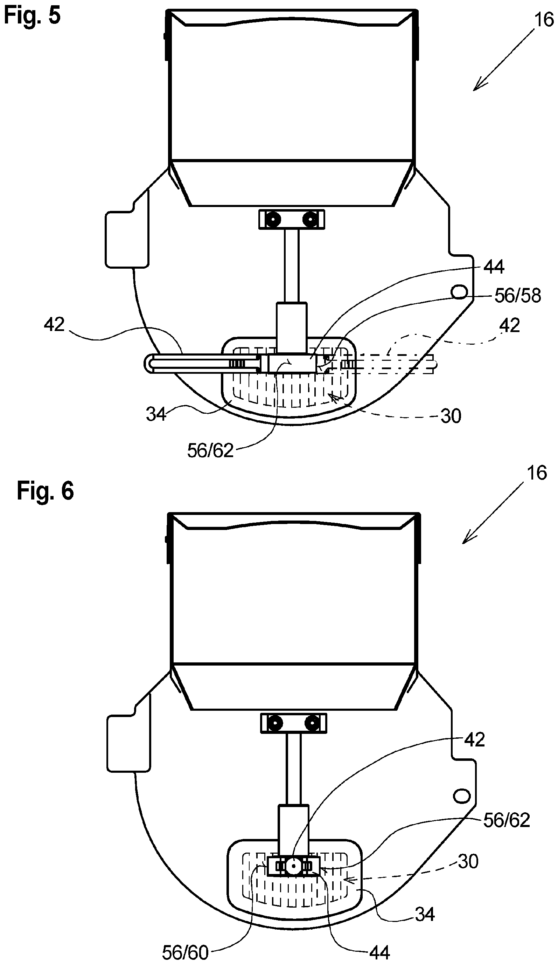

Die Funktionsweise der Bedieneinrichtung 40 ist nachfolgend anhand der Figuren 5 bis 8 dargestellt:
Die Figur 5 zeigt das Verschlusselement 34 in einem betriebsbereiten Zustand der Vorrichtung 2, in dem das Verschlusselement 34 in der Schließstellung über der Auslassöffnung 40 angeordnet ist und das Stellglied 42 der Bedieneinrichtung 40 in die linke Fixierstellung verbracht ist. Alternativ hierzu kann das Stellglied 42, wie durch strichpunktierte Linien dargestellt, auch in die rechte Fixierstellung verbracht sein. In beiden Fixierstellungen drückt dabei der jeweilige äußere Kontaktabschnitt 60, 62 der Außenumfangsfläche 56 des Exzenternockenelementes 44, wie oben beschrieben, gegen den Aufnahmeboden 54 der Vertiefung 52 und erzeugt dabei die Anpresskraft, mit der das Verschlusselement 34 die Auslassöffnung 30 flüssigkeitsdicht abdichtet und dabei gegenüber dem Vorrichtungsgehäuse 4 fixiert wird.

Durch Verschwenken des Stellgliedes 42 in die Freigabestellung gemäß Figur 6 wird nun der innere Kontaktabschnitt 58 der Außenumfangsfläche 56 an der Vertiefung 52 angeordnet. Aufgrund des geringeren ersten Radius R1 des inneren Kontaktabschnittes 58 gegenüber dem zweiten Radius R2 der beiden äußeren Kontaktabschitte 60, 62, wird hierbei die Anpresskraft zumindest weitestgehend aufgehoben, so dass das Verschlusselement 34 nicht mehr gegenüber dem Vorrichtungsgehäuse 4 fixiert ist.

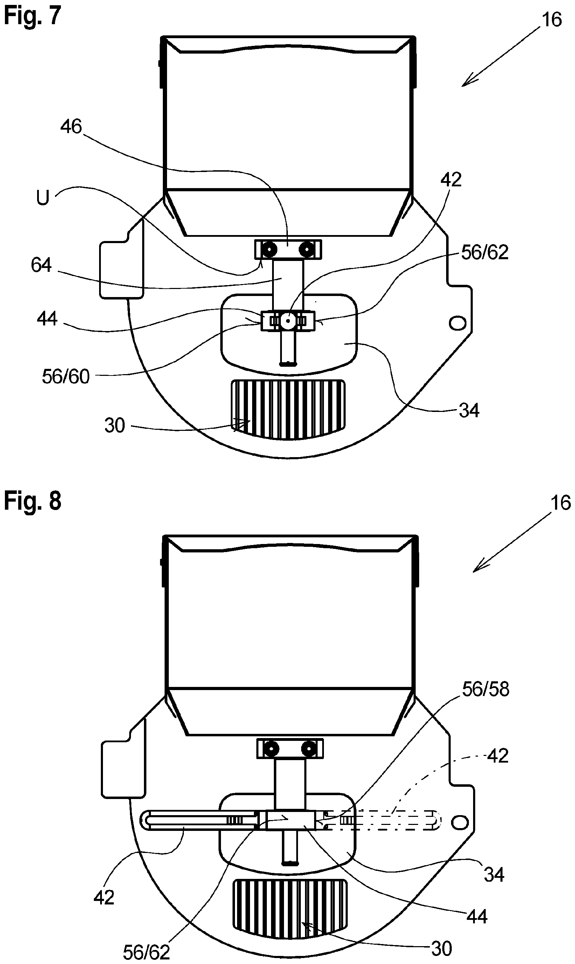

Durch eine vertikale Verlagerung des Stellgliedes 42 kann das Verschlusselement 34 in der Freigabestellung somit zusammen mit dem Exzenternockenelement 44 entlang des Führungsstabes 48 in die Offenstellung gemäß Figur 7 verschoben werden, in der die Auslassöffnung 30 zumindest teilweise nach außen hin geöffnet ist.

Durch erneutes Verschwenken des Stellgliedes 42 in eine der beiden Fixierstellungen gemäß Figur 8 wird nun wieder der betreffende äußere Kontaktabschnitt 60; 62 der Außenumfangsfläche 56 in Anlage am Aufnahmeboden 54 der Vertiefung 52 gebracht. Hierbei wird in Folge des größeren zweiten Radius R2 gegenüber dem ersten Radius R1 wieder die Anpresskraft erzeugt, mit der das Verschlusselement 34 nun in der eingestellten Offenstellung gegenüber dem Vorrichtungsgehäuse 4 fixiert wird. Dabei kann je nach vorgesehenem Arbeitsablauf und/oder je nachdem, ob der Benutzer Links- oder Rechtshänder ist, zwischen der linken Fixierstellung und der rechten Fixierstellung gewählt werden.

In der eingestellten Fixierstellung kann dann das über die Auslassöffnung 30 austretende Produkt, beispielsweise unter Verwendung eines Abstreifmittels (nicht dargestellt) in einen Auffangbehälter B abgefüllt werden. Durch die Auswahlmöglichkeit der beiden Fixierstellungen können dabei Verkantungen mit der Bedieneinrichtung vermieden werden. Zudem kann der jeweilige Benutzer, je nachdem ob er Links- oder Rechtshänder ist, die Fixierstellung so wählen, dass er das Produkt mit seiner bevorzugten Hand abstreifen kann, während die jeweils andere Hand das Stellglied 42 wiederkehrend betätigen kann oder umgekehrt.

## Patentansprüche

1. Vorrichtung (2) zur Herstellung eines fließfähigen Produktes, insbesondere von Speiseeis, aus einem Flüssigkeitsgemisch umfassend
einen in einem Vorrichtungsgehäuse (4) vorgesehenen Verarbeitungsbehälter (6) mit einer temperierbaren Innenwandung (8), die einen zur Aufnahme des Flüssigkeitsgemisches geeigneten Innenraum (10) umschließt, in dem eine Rühreinrichtung (12) vorgesehen ist, wobei der Verarbeitungsbehälter (6) eine Einfüllöffnung (22) für die Eingabe des Flüssigkeitsgemisches und eine Auslassöffnung (30) für die Abgabe des Produktes aufweist,
einem an der Auslassöffnung (30) verlagerbar gehaltenen Verschlusselement (34), das zwischen einer Schließstellung, in welcher die Auslassöffnung (30) verschlossen ist, und einer Offenstellung verstellbar ist, in welcher die Auslassöffnung (30) wenigstens teilweise geöffnet ist,
und eine Bedieneinrichtung (40), die ein mit dem Verschlusselement (34) wirkverbundenes Stellglied (42) aufweist, das zwischen einer Fixierstellung, in welcher das Verschlusselement (34) gegenüber der Auslassöffnung (30) positionsstabil fixiert ist, und einer Freigabestellung verschwenkbar ist, in welcher das Verschlusselement (34) zwischen der Schließstellung und der Offenstellung verstellbar ist,
**dadurch gekennzeichnet, dass** das Stellglied (42) zwischen einer linken Fixierstellung und einer rechten Fixierstellung verschwenkbar ist.

2. Vorrichtung nach Anspruch 1, **dadurch gekennzeichnet, dass** die Freigabestellung zwischen der linken und rechten Fixierstellung vorgesehen ist.

3. Vorrichtung nach einem der Ansprüche 1 oder 2, **dadurch gekennzeichnet, dass** das Verschlusselement (34) über das Stellglied (42) in der Freigabestellung zwischen der Schließstellung und der Offenstellung vertikal verlagerbar ist.

4. Vorrichtung nach einem der Ansprüche 1 bis 3, **dadurch gekennzeichnet, dass** die Bedieneinrichtung (40) wenigstens ein Anpressmittel aufweist, das das Verschlusselement (34) in den beiden Fixierstellungen in Richtung des Verarbeitungsbehälters (6) mit einer Anpresskraft beaufschlagt.

5. Vorrichtung nach Anspruch 4, **dadurch gekennzeichnet, dass** das Anpressmittel als Exzenternockenelement (44) ausgebildet ist, das an das Verschlusselement (34) anlegbar und mittels des Stellgliedes (42) zwischen den beiden Fixierstellungen und der Freigabestellung um eine Drehachse (D) verdrehbar ist.

6. Vorrichtung nach Anspruch 5, **dadurch gekennzeichnet, dass** das Exzenternockenelement (44) eine Außenumfangsfläche (56) aufweist, die in der Freigabestellung mit einem inneren Kontaktabschnitt (58) und in den beiden Fixierstellungen jeweils mit einem äußeren Kontaktabschnitt (60; 62) an dem Verschlusselement (34) anliegt, wobei der Abstand zwischen der Außenumfangsfläche (56) und der Drehachse (D) am inneren Kontaktabschnitt (58) kleiner ist als an den beiden äußeren Kontaktabschnitten (60, 62).

7. Vorrichtung nach Anspruch 6, **dadurch gekennzeichnet, dass** der Abstand zwischen der Außenumfangsfläche (56) und der Drehachse (D) vom inneren Kontaktabschnitt (58) hin zu den beiden äußeren Kontaktabschnitten (60, 62) stufenlos zunimmt.

8. Vorrichtung nach einem der Ansprüche 5 bis 7, **dadurch gekennzeichnet, dass** das drehbeweglich gelagerte Exzenternockenelement (44) in eine Vertiefung (52) des Verschlusselementes (34) ragt, wobei die Außenumfangsfläche (56) an einen Aufnahmeboden (54) der Vertiefung (52) anlegbar ist.

9. Vorrichtung nach Anspruch 8, **dadurch gekennzeichnet, dass** der Aufnahmeboden (54) der Vertiefung (52) konkav gekrümmt ist und dabei an eine Krümmung der Außenumfangsfläche (56) angepasst ist.

10. Vorrichtung nach einem der Ansprüche 4 bis 9, **dadurch gekennzeichnet, dass** die Bedieneinrichtung (40) einen an der Außenseite des Vorrichtungsgehäuses (4) angeordneten Führungsstab (48) aufweist, der die Drehachse (D) bildet und an dem das Exzenternockenelement (44) drehbeweglich gelagert ist.

11. Vorrichtung nach Anspruch 10, **dadurch gekennzeichnet, dass** das Exzenternockenelement (44) eine Durchgangsbohrung (50) zur vertikal verschiebbaren Lagerung an dem Führungsstab (48) aufweist.

12. Vorrichtung nach einem der Ansprüche 1 bis 11, **dadurch gekennzeichnet, dass** in der Auslassöffnung (30) ein Gitter (32) positionsfest angeordnet ist.

## Claims

1. Device (2) for producing a flowable product, in particular ice cream, from a liquid mixture, comprising
a processing container (6) provided in a device housing (4) with a temperature-controllable inner wall (8) which encloses an inner space (10) suitable for receiving the liquid mixture, in which a stirring apparatus (12) is provided, wherein the processing container (6) has a filling opening (22) for introducing the liquid mixture and an outlet opening (30) for dispensing the product,
a closure element (34) which is displaceably held at the outlet opening (30), which is adjustable between a closed position in which the outlet opening (30) is closed, and an open position in which the outlet opening (30) is at least partially open,
and an operating apparatus (40), which has an actuator (42) which is operatively coupled with the closure element (34), which is pivotable between a fixing position, in which the closure element (34) is fixed in a stable position relative to the outlet opening (30), and a releasing position, in which the closure element (34) is adjustable between the closed position and the open position,
**characterised in that** the actuator (42) is pivotable between a left fixing position and a right fixing position.

2. Device according to claim 1, **characterised in that** the releasing position is provided between the left and right fixing positions.

3. Device according to any one of claims 1 or 2, **characterised in that**, in the releasing position, the closure element (34) is vertically displaceable between the closed position and the open position via the actuator (42).

4. Device according to any one of claims 1 to 3, **characterised in that** the operating apparatus (40) has at least one pressing means which, in the two fixing positions, applies a pressing force to the closure element (34) towards the processing container (6).

5. Device according to claim 4, **characterised in that** the pressing means is formed as an eccentric cam element (44), which is restable against the closure element (34) and which is twistable about an axis of rotation (D) between the two fixing positions and the releasing position by means of the actuator (42).

6. Device according to claim 5, **characterised in that** the eccentric cam element (44) has an outer peripheral surface (56) which rests against the closure element (34) with an inner contact section (58) in the releasing position and with a respective outer contact section (60; 62) in the two fixing positions, wherein the distance between the outer peripheral surface (56) and the axis of rotation (D) is smaller at the inner contact section (58) than at the two outer contact sections (60, 62).

7. Device according to claim 6, **characterised in that** the distance between the outer peripheral surface (56) and the axis of rotation (D) increases continuously from the inner contact section (58) to the two outer contact sections (60, 62).

8. Device according to any one of claims 5 to 7, **characterised in that** the rotatably mounted eccentric cam element (44) extends into a recess (52) of the closure element (34), wherein the outer peripheral surface (56) is restable against a receiving base (54) of the recess (52).

9. Device according to claim 8, **characterised in that** the receiving base (54) of the recess (52) is concavely curved and is adapted to a curvature of the outer peripheral surface (56).

10. Device according to any one of claims 4 to 9, **characterised in that** the operating apparatus (40) has a guide rod (48) which is arranged at the outside of the device housing (4), which forms the axis of rotation (D), and at which the eccentric cam element (44) is rotatably mounted.

11. Device according to claim 10, **characterised in that** the eccentric cam element (44) has a through hole (50) for vertically displaceable mounting at the guide rod (48).

12. Device according to any one of claims 1 to 11, **characterised in that** a grid (32) is arranged in a fixed position in the outlet opening (30).

## Revendications

1. Dispositif (2) de fabrication d'un produit fluide, en particulier de crème glacée, à partir d'un mélange de liquides, comprenant
un récipient de traitement (6) prévu dans un boîtier de dispositif (4) avec une paroi intérieure (8) pouvant être mise en température, qui entoure un espace intérieur (10) approprié à la réception du mélange de liquides, dans lequel un appareil d'agitation (12) est prévu, dans lequel le récipient de traitement (6) présente une ouverture de remplissage (22) pour introduire le mélange de liquides et une ouverture de sortie (30) pour distribuer le produit,
un élément de fermeture (34) maintenu de manière déplaçable au niveau de l'ouverture de sortie (30), qui peut pivoter entre une position de fermeture, dans laquelle l'ouverture de sortie (30) est fermée, et une position d'ouverture, dans laquelle l'ouverture de sortie (30) est au moins partiellement ouverte,
et un appareil de commande (40) qui présente un actionneur (42) en liaison active avec l'élément de fermeture (34), qui peut pivoter entre une position de fixation, dans laquelle l'élément de fermeture (34) est fixé en position stable par rapport à l'ouverture de sortie (30), et une position de libération, dans laquelle l'élément de fermeture (34) peut pivoter entre la position de fermeture et la position d'ouverture,
**caractérisé en ce que** l'actionneur (42) peut pivoter entre une position de fixation gauche et une position de fixation droite.

2. Dispositif selon la revendication 1, **caractérisé en ce que** la position de libération est prévue entre la position de fixation gauche et la position de fixation droite.

3. Dispositif selon l'une quelconque des revendications 1 ou 2, **caractérisé en ce que** l'élément de fermeture (34) peut pivoter verticalement entre la position de fermeture et la position d'ouverture par l'intermédiaire de l'actionneur (42) dans la position de libération.

4. Dispositif selon l'une quelconque des revendications 1 à 3, **caractérisé en ce que** l'appareil de commande (40) présente au moins un moyen de pression qui exerce une force de pression sur l'élément de fermeture (34) dans les deux positions de fixation en direction du récipient de traitement (6).

5. Dispositif selon la revendication 4, **caractérisé en ce que** le moyen de pression est conçu en tant qu'élément de came excentrique (44) qui peut être appliqué sur l'élément de fermeture (34) et peut être tourné autour d'un axe de rotation (D) entre les deux positions de fixation et la position de libération au moyen de l'actionneur (42).

6. Dispositif selon la revendication 5, **caractérisé en ce que** l'élément de came excentrique (44) présente une surface périphérique extérieure (56) qui, dans la position de libération, repose contre l'élément de fermeture (34) avec une section de contact intérieure (58) et, dans les deux positions de fixation, respectivement avec une section de contact extérieure (60; 62), dans lequel la distance entre la surface périphérique extérieure (56) et l'axe de rotation (D) est plus petite au niveau de la section de contact intérieure (58) qu'au niveau des deux sections de contact extérieures (60, 62).

7. Dispositif selon la revendication 6, **caractérisé en ce que** la distance entre la surface périphérique extérieure (56) et l'axe de rotation (D) augmente en continu depuis la section de contact intérieure (58) vers les deux sections de contact extérieures (60, 62).

8. Dispositif selon l'une quelconque des revendications 5 à 7, **caractérisé en ce que** l'élément de came excentrique (44) monté de manière à pouvoir tourner pénètre dans un évidement (52) de l'élément de fermeture (34), dans lequel la surface périphérique extérieure (56) peut être placée sur un fond de réception (54) de l'évidement (52).

9. Dispositif selon la revendication 8, **caractérisé en ce que** le fond de réception (54) de l'évidement (52) est incurvé de manière concave et est ainsi adapté à une courbure de la surface périphérique extérieure (56).

10. Dispositif selon l'une quelconque des revendications 4 à 9, **caractérisé en ce que** l'appareil de commande (40) présente une tige de guidage (48) disposée sur le côté extérieur du boîtier de dispositif (4), tige qui forme l'axe de rotation (D) et au niveau de laquelle l'élément de came excentrique (44) est monté de manière à pouvoir tourner.

11. Dispositif selon la revendication 10, **caractérisé en ce que** l'élément de came excentrique (44) présente un alésage traversant (50) pour le montage verticalement déplaçable au niveau de la tige de guidage (48).

12. Dispositif selon l'une quelconque des revendications 1 à 11, **caractérisé en ce qu'**une grille (32) est disposée en position fixe dans l'ouverture de sortie (30).
